# EUROPÄISCHE PATENTSCHRIFT

(11) **EP 1 468 226 B1**
(45) Veröffentlichungstag und Bekanntmachung des Hinweises auf die Patenterteilung: **20.07.2005**
(21) Anmeldenummer: 03729483.2
(22) Anmeldetag: 18.01.2003
(51) Int. Cl.: F24J 3/08

(54) **W RMEQUELLEN- ODER W RMESENKEN-ANLAGE MIT THERMISCHER E RDANKOPPLUNG**
HEAT SOURCE OR HEAT SINK UNIT WITH THERMAL GROUND COUPLING
DISPOSITIF DE SOURCE THERMIQUE OU DISSIPATEUR THERMIQUE COMPORTANT UN COUPLAGE THERMIQUE A LA TERRE

(30) Priorität: 21.01.2002 DE 10202261
(43) Veröffentlichungstag der Anmeldung: 20.10.2004
(73) Patentinhaber: Waterkotte Wärmepumpen GmbH, 44628 Herne (DE)
(72) Erfinder: WATERKOTTE, Klemens, 44627 Herne (DE)
(74) Vertreter: Linnemann, Winfried
(86) Internationale Anmeldenummer: PCT/EP2003/000470
(87) Internationale Veröffentlichungsnummer: WO 2003/060389

(56) Entgegenhaltungen:
- EP-A- 1 006 322
- DE-U- 7 936 659
- DE-U- 9 414 813
- LU-A- 81 670
- US-A- 4 808 032

## Beschreibung

Die vorliegende Erfindung betrifft eine Wärmequellen- oder Wärmesenken-Anlage mit thermischer Erdankopplung für die oberflächennahe Gewinnung von Wärmeenergie aus dem Erdreich oder für die oberflächennahe Einleitung von Wärmeenergie in das Erdreich, wobei die Anlage mindestens eine im Erdreich angeordnete Erdsonde umfaßt, wobei Wärmeenergie mittels eines durch die Erdsonde geleiteten Wärmetransportfluids entweder aus dem Erdreich entnehmbar oder in das Erdreich einleitbar ist, wobei jede Erdsonde ein zum umgebenden Erdreich dichtes, metallisches Sondenrohr aus mehreren in das Erdreich eingetriebenen Rammrohrsegmenten umfaßt und wobei im Sondenrohr für die Zu- oder Abführung des Wärmetransportfluids entweder ein an seinem unteren Ende offenes Tauchrohr oder eine U-förmig verlaufende Rohrschleife angeordnet ist.

Anlagen für die eingangs genannten Verwendungszwecke sind in unterschiedlichen Ausführungen aus der Praxis bekannt. Diese bekannten Lösungen lassen sich im wesentlichen in drei verschiedene Gruppen zusammenfassen.

Eine erste Gruppe von Anlagen gemäß dem bekannten Stand der Technik arbeitet mit einem offenen Kreislauf mit einer Entnahme von Grundwasser aus einem Grundwasserleiter, dessen Abkühlung oder Erwärmung in einer Wärmepumpe oder einem anderen Aggregat und dessen Wiedereinleitung in den Grundwasserleiter. Diese Wärmegewinnung aus dem Grundwasser oder Wärmeeinleitung in das Grundwasser ist allerdings nur dann möglich, wenn ein geeigneter Grundwasserleiter vorhanden ist und wenn die Grundwasserqualität ausreichend ist. Zudem ist eine behördliche Genehmigung für die Entnahme und Wiedereinleitung von Grundwasser erforderlich, die nur unter bestimmten Voraussetzungen erteilt wird.

Weiterhin sind bereits Flächenkollektoren bekannt, die üblicherweise als horizontal angeordnete Rohrregister-Wärmeaustauscher ausgeführt sind und die in einer Tiefe von etwa 1 m oder etwas mehr im Erdreich verlegt sind. Diese Flächenkollektoren erfordern umfangreiche Erdarbeiten und sind dadurch in ihrer Installation teuer und zudem je nach den örtlichen Gegebenheiten häufig nicht anwendbar.

Schließlich sind Erdsonden zur Erstellung von Wärmequellenanlagen bekannt. Diese bekannten Erdsonden bestehen aus einer einfachen oder doppelten Rohrschleife, die in einer vertikal in das Erdreich eingebrachten Bohrung eingebaut ist. Allgemein liegt die Tiefe der Bohrung unter 100 m, kann aber auch darüber hinausgehen. Bei Sandboden erfolgt das Niederbringen der Bohrungen üblicherweise als Spülbohrungen. Im festen Boden wird überwiegend das sogenannte Lufthebe-Bohrverfahren mit einem Im-Loch-Hammer verwendet. Dieses Bohrverfahren erfordert die Bereitstellung eines zweistufigen Luftkompressors mit einem Arbeitsdruck von bis zu 24 bar und einer Antriebsleistung von 200 kW und mehr. Bei Lockergestein wird mit einer Schutzverrohrung gebohrt, die in der Praxis einen typischen Durchmesser von beispielsweise 152 mm hat. Im Festgestein wird mit einem typischen Durchmesser von beispielsweise 128 mm weitergebohrt, bis die jeweils benötigte Endtiefe erreicht ist. In die fertig gestellte Erdbohrung muß die vorkonfektionierte Rohrschleife eingebracht werden. Anschließend muß der verbleibende Raum zwischen der Rohrschleife und der Wandung der Erdbohrung mit einem Füllstoff, in der Praxis meist Bentonit, d.h. ein Zement-Ton-Gemisch, von unten nach oben fortschreitend verfüllt werden. Hiermit erreicht man ein zuverlässiges und dauerhaftes Verschließen wasserführender Schichten untereinander sowie den notwendigen thermischen Kontakt zwischen der Rohrschleife und dem Erdreich. Ersichtlich ist auch die Erstellung einer derartigen Anlage sehr aufwendig und dadurch teuer. Zudem sind auch diese Anlagen genehmigungspflichtig, so daß durch entsprechende Beantragung und Bearbeitung von Genehmigungen zusätzlicher Aufwand an Kosten und Zeit entsteht. Nach praktischen Beobachtungen behandeln zudem die zuständigen Behörden derartige Anträge häufig restriktiv und mit überzogener Vorsicht im Hinblick auf mögliche Grundwasserverunreinigungen bei Leckagen.

Aus DE 79 36 659 U1 ist eine Vorrichtung zum Einbringen von stangenförmigen Wärmetauschern in das Erdreich bekannt. Für die dabei verwendeten Wärmetauscher ist bevorzugt vorgesehen, daß diese die Form von Rammkernsonden haben, die aus untereinander mittels konischer Gewindestücke verschraubten Teilstücken zusammengesetzt sind. Nachteilig ist hierbei, daß Schraubverbindungen, ebenso wie die auch aus der Praxis bekannten Schweiß- oder Lötverbindungen zwischen den Teilstücken beim Einschlagen empfindlich sind und zu Rissen und damit verbundenen Undichtigkeiten neigen. Das Einschneiden von Gewinden, das Schweißen oder das Löten führen nachteilig sämtlich zu lokalen Struktur- und Härteveränderungen im Material der Sondenrohrteilstücke und damit zu potentiellen Schwachstellen, von denen früher oder später Risse oder Brüche ausgehen können.

Für die vorliegende Erfindung stellt sich deshalb die Aufgabe, eine Anlage der eingangs genannten Art zu schaffen, bei der die vorstehend dargelegten Nachteile vermieden werden und die insbesondere wirtschaftlich erstellbar ist, die besonders sicher im Hinblick auf mögliche Umweltbeeinträchtigungen ist, die eine sehr lange Lebensdauer hat und die einen guten Wirkungsgrad aufweist.

Die Lösung dieser Aufgabe gelingt erfindungsgemäß mit einer Anlage der.eingangs genannten Art, die dadurch gekennzeichnet ist,
- daß jedes Rammrohrsegment aus duktilem Gußeisen besteht,
- daß die Rammrohrsegmente an ihren Enden ineinandersteckbar ausgebildet sind und
- daß jedes Rammrohrsegment an seinem einen Ende einen konisch zulaufenden Außenumfang und an seinem anderen Ende eine mit einer Anschlagschulter ausgeführte Muffe mit einem passenden konischen Innenumfang aufweist, wobei deren Durchmesser und Konuswinkel so bemessen sind, daß mit dem Eintreiben der Rammrohrsegmente eine kraftschlüssige und dichte Verbindung der Rammrohrsegmente untereinander erzeugbar ist.

Erfindungsgemäß ist zunächst vorgesehen, daß jedes Rammrohrsegment aus duktilem Gußeisen besteht. Der wesentliche Unterschied von duktilem Gußeisen zu herkömmlichem Grauguß besteht darin, daß im duktilen Gußeisen das enthaltene Graphit in Form von Kugelgraphit vorliegt, wodurch sich die mechanischen Eigenschaften verändern; insbesondere werden die Festigkeit und die Zähigkeit angehoben. Die chemischen Eigenschaften des duktilen Gußeisens sind gegenüber dem Grauguß ebenfalls verbessert, insbesondere die Korrosionsfestigkeit gegen Lochfraß. Die Herstellung der Rammrohrsegmente ist beispielsweise als Schleuderguß möglich, wobei praktisch zu 100% Recyclingmaterial, also Stahlschrott, eingesetzt werden kann, was sowohl ökonomisch als auch ökologisch vorteilhaft ist. Durch eine auf den Guß folgende spezielle Nachbehandlung sind die Rammrohrsegmente aus duktilem Gußeisen mechanisch so widerstandsfähig, daß sie mit erheblichen Schlagkräften in das Erdreich eingetrieben werden können, ohne Schaden zu erleiden. Zur weiteren Vereinfachung der Erstellung der Sondenrohre ist erfindungsgemäß vorgesehen, daß die Rammrohrsegmente an ihren Enden ineinander steckbar ausgebildet sind. Aufwendige Schraub-, Löt- oder Schweißverbindungen, die sich auf der Baustelle nur unter größten Schwierigkeiten herstellen und prüfen lassen, werden zwischen den aufeinanderfolgenden Rammrohrsegmenten nicht benötigt. Dadurch wird auch die mechanische Bearbeitung der Enden der Rammrohrsegmente bei deren Herstellung vereinfacht und auch der Arbeitsaufwand und die Gefahr von Arbeitsfehlern auf der Baustelle am Ort des Eintreibens der Rammrohrsegmente in das Erdreich werden vermindert. Gemäß Erfindung ist dabei weiterhin vorgesehen, daß jedes Rammrohrsegment an seinem einen Ende einen konisch zulaufenden Außenumfang und an seinem anderen Ende eine Muffe mit einem passenden konischen Innenumfang aufweist, wobei deren Konuswinkel so bemessen sind, daß allein mit dem Eintreiben der Rammrohrsegmente eine dauerhaft kraftschlüssige und dichte Verbindung der Rammrohrsegmente untereinander erzeugbar ist. Diese Ausgestaltung der Rammrohrsegmente sorgt dafür, daß allein durch den Eintreibvorgang schon die gewünschte Dichtigkeit und kraftschlüssige Verbindung der einzelnen Rammrohrsegmente untereinander erreicht wird. Besondere Dichtmittel sind nicht erforderlich. Die Muffe ist jeweils mit einer Schulter versehen und in Verbindung mit dem eingesteckten Teil des jeweils anderen Segments so gestaltet, daß das eingesteckte Segment nach einer definierten Aufweitung der Muffe auf diese Schulter aufsetzt und danach die Eintreibimpulse weiterleitet, ohne daß die Muffe in Richtung einer weiteren Aufweitung unzulässig beansprucht werden kann. Bei geeigneter Stärke der Impulse oder Rammschläge zum Eintreiben der Rammrohrsegmente wird erreicht, daß im Verbindungsbereich zweier Rammrohrsegmente miteinander sich eine Reibverschweißung ergibt, die die gewünschte Dichtigkeit und kraftschlüssige Verbindung für sehr lange Einsatzzeiten des Sondenrohrs gewährleistet. Da eine spätere zerstörungsfreie Trennung der einzelnen Rammrohrsegmente voneinander nicht erforderlich ist, stellt diese feste Reibverschweißung keinerlei technischen Nachteil dar.

Da die Sondenrohre jeweils aus mehreren in das Erdreich eingetriebenen Rammrohrsegmenten bestehen, ist eine besonders wirtschaftliche Erstellung der Anlage gewährleistet. Diese hohe Wirtschaftlichkeit wird insbesondere deshalb erreicht, weil das Eintreiben der Rammrohrsegmente zur Bildung des Sondenrohrs mittels geeigneter Einrichtungen, insbesondere mittels eines handelsüblichen Hydraulikhammers, einen wesentlich geringeren zeitlichen und technischen Aufwand, insbesondere einen mindestens 80% geringeren Energieaufwand, erfordert als die Erstellung einer Erdbohrung. Die Rammrohrsegmente sind selbstverständlich so ausgeführt, daß sie beim Eintreiben in das Erdreich die dabei auftretenden Schlagkräfte schadlos aufnehmen können. Vorteilhaft ist das Sondenrohr allein durch sein Eintreiben zum umgebenden Erdreich dicht, so daß ein Austreten des Wärmetransportfluids aus dem Sondenrohr in das Erdreich praktisch ausgeschlossen ist, zumal die Rammrohrsegmente, die das Sondenrohr bilden, wegen der benötigen mechanischen Stabilität relativ dickwandig sind. Dabei bleibt die Dichtigkeit entsprechend der Lebenserwartung der Sondenrohre auch über lange Zeiträume von vielen Jahrzehnten erhalten.

Mit der erfindungsgemäßen Anlage wird ein hoher Wirkungsgrad erzielt, weil jedes Sondenrohr nach seinem Eintreiben in das Erdreich in einem festen und innigen Kontakt zu dem umgebenden Erdreich steht, ohne daß besondere Füll- oder Kontaktmittel in den Bereich des Außenumfangs des Sondenrohrs eingebracht werden müssen. Damit ist ohne besondere Maßnahmen schon ein guter Wärmeübergang aus dem Erdreich in das Sondenrohr oder umgekehrt gewährleistet. Da das Sondenrohr selbst metallisch ist, hat es eine sehr hohe Wärmeleitfähigkeit, so daß insgesamt ein sehr niedriger Widerstand bei der Wärmeleitung aus dem Erdreich in das im Inneren des Sondenrohrs strömende Wärmetransportfluid bzw. in umgekehrter Richtung vorliegt.

Die Anlage kann sowohl als Wärmequelle für Heizzwecke als auch als Wärmesenke für Kühlzwecke eingesetzt werden. Für Kühlzwecke kann dabei die Anlage entweder auf dem natürlichen Temperaturniveau oder unter Zwischenschaltung einer umgekehrt betriebenen Wärmepumpe, also eines Kälteaggregats, eingesetzt werden. Bei einer umschaltbaren Wärmepumpe ist sogar wahlweise wechselnd ein Heiz- oder Kühlbetrieb möglich. Diese Anwendung ist ganz besonders in südlicheren, heißeren Regionen der Erde oder in Regionen mit typischem Festlandklima von besonderem Vorteil.

In weiterer Ausgestaltung schlägt die Erfindung bevorzugt vor, daß jeweils der konisch zulaufende Außenumfang jedes Rammrohrsegments an dessen vorderem Ende und die mit der Anschlagschulter ausgeführte Muffe jedes Rammrohrsegments an dessen hinterem Ende vorgesehen ist. Mit dieser Ausführung wird ein möglichst geringer Bewegungswiderstand der Rammrohrsegmente bei deren Eintreiben in das Erdreich erreicht.

Ein weiterer Beitrag für eine hohe Wirtschaftlichkeit wird dadurch erreicht, daß für die Zu- oder Abführung des Wärmetransportfluids nur ein an seinem unteren Ende offenes Tauchrohr benötigt wird, wobei vorzugsweise weiterhin der Außendurchmesser des Tauchrohrs kleiner als der Innendurchmesser des Sondenrohrs ist und die Länge des Tauchrohrs geringfügig kleiner als die Länge des Sondenrohrs ist. Die zweite Hälfte des Strömungsweges des Wärmetransportfluids verläuft dann durch den Teil des Inneren des Sondenrohrs, der nicht von dem Tauchrohr eingenommen wird. Durch diese Konstruktion ergibt sich ein denkbar geringer hydraulischer Widerstand der Erdsonde, was für die Praxis von ausschlaggebender Bedeutung ist. Das Einbringen eines Füllstoffs ist hier nicht erforderlich.

Alternativ besteht die Möglichkeit, daß im Sondenrohr anstelle des Tauchrohrs für die Zu- und Abführung des Wärmetransportfluids eine U-förmig verlaufende Rohrschleife angeordnet ist, wobei weiter bevorzugt vorgesehen ist, daß deren Länge bis zu ihrem U-Bogen geringfügig kleiner als die Länge des Sondenrohrs ist und daß der nicht von der Rohrschleife eingenommene Teil des Inneren des Sondenrohrs mit einem wärmeleitfähigen Füllmaterial gefüllt ist. Diese Ausführung der erfindungsgemäßen Anlage bietet den Vorteil einer besonders hohen Sicherheit gegen ein Eindringen des Wärmetransportfluids in das Erdreich in der Umgebung des Sondenrohrs, da hier sowohl die Rohrschleife als auch das Sondenrohr undicht werden müssen, bevor das Wärmetransportfluid in das Erdreich gelangen kann. Auf der anderen Seite wird aber diese erhöhte Sicherheit mit einem etwas geringeren Wirkungsgrad erkauft, weil hier insgesamt etwas höhere Widerstände bei der Wärmeleitung aus dem Erdreich in das Wärmetransportfluid und umgekehrt vorliegen.

Um beim Eintreiben der Rammrohrsegmente in das Erdreich mit möglichst geringen Eintreibkräften einen möglichst großen Vortrieb zu erreichen, ist zweckmäßig das erste, vorlaufende Rammrohrsegment des Sondenrohrs an seinem vorderen Ende mit einer Sondenspitze ausgeführt oder dicht verbunden. Sofern die Sondenspitze mit dem Rammrohrsegment dicht verbunden ist, erfolgt diese Verbindung zweckmäßig in der vorstehend beschriebenen Art und Weise durch konische Verbindungsbereiche und deren Reibverschweißung durch Rammschläge.

Weiter ist erfindungsgemäß vorgesehen, daß das letzte Rammrohrsegment des Sondenrohrs an seinem hinteren Ende dicht mit einem nach dem Eintreiben aufgesetzten Anschlußdeckel verbunden ist, an dem ein Vorlaufleitungsanschluß und ein Rücklaufleitungsanschluß für das Wärmetransportfluid angeordnet sind. Der Anschlußdeckel stellt die benötigten Anschlüsse für den Vorlauf und Rücklauf des Wärmetransportfluids zur Verfügung. Da der Deckel nachträglich aufzusetzen ist, stört er beim Eintreiben der Rammrohrsegmente nicht. Da dadurch der Deckel keine Eintreibkräfte aufnehmen muß, kann er leicht ausgeführt sein und es genügen für die Anbringung und Abdichtung des Deckels auf dem letzten Rammrohrsegment herkömmliche Verbindungstechniken. Bei einer Wärmegewinnungsanlage wird es vorteilhaft sein, den Vorlauf des Wärmetransportfluids durch das Tauchrohr zu führen. Der Austritt des Fluids aus der Erdsonde erfolgt dann durch den Deckel, wo das Fluid temperaturmäßig bereits die Frostgrenze sicher überschritten hat, sodaß am Deckel keine Sprengwirkung durch Eisbildung auftreten kann, wie sie aus der Kältetechnik als Problem bekannt ist.

Ein weiterer Beitrag zu einem vorteilhaften niedrigen Herstellungsaufwand besteht darin, daß das Tauchrohr oder die Rohrschleife allein am oder im Anschlußdeckel gehaltert ist. Aufwendige und nur schwer zugängliche Halterungsmittel im Verlauf des Sondenrohrs selbst sind hier nicht erforderlich. Für die Funktion der Erdsonde und für deren Wirkungsgrad spielt es auch keine merkliche Rolle, ob das Tauchrohr oder die Rohrschleife exakt zentriert durch das Sondenrohr verläuft oder ob es sich der Wandung des Sondenrohrs mehr oder weniger annähert. Da das Tauchrohr oder die Rohrschleife am oder im Anschlußdeckel gehaltert ist, befindet es/sie sich beim Eintreiben der Rammrohrsegmente noch nicht in diesen, so daß das Tauchrohr oder die Rohrschleife auch bei diesem Arbeitsschritt nicht störend wirken oder beschädigt werden kann. Das Tauchrohr oder die Rohrschleife wird erst in das Sondenrohr eingeführt, wenn dieses vollständig in der vorgesehenen Länge in das Erdreich eingetrieben ist.

Um Störungen des Wärmetransports durch die Erdsonde und durch die übrigen Teile der Anlage infolge von Luftblasen zu vermeiden, ist vorgesehen, daß das Tauchrohr oder die Rohrschleife an ihrem oberen Ende eine Entlüftungsbohrung oder ein Entlüftungsventil aufweist. Durch die Bohrung oder das Ventil kann Luft im höchsten Punkt des Sondenrohrs aus dem Tauchrohr oder der Rohrschleife austreten und mit dem rücklaufenden Wärmetransportfluid abgeführt werden. Die endgültige Abscheidung der Luft erfolgt dann zweckmäßig in bekannter Weise mittels einer selbsttätigen Entlüftungseinrichtung in dem am höchsten gelegenen Teil der Anlage.

Bevorzugt besteht das Tauchrohr oder die Rohrschleife aus Kunststoff, vorzugsweise Polyethylen (PE) oder Polypropylen (PP). Auf diese Weise wird allein aufgrund des Materials schon ein guter Wärmeisolationswert erreicht, der einen unerwünschten Wärmeaustausch zwischen dem vorlaufenden und rücklaufenden Wärmetransportfluid innerhalb des Sondenrohrs sehr gering hält. Außerdem wird das Tauchrohr auf diese Weise relativ leicht, so daß es in Verbindung mit seinem Auftrieb im Wärmetransportfluid den Anschlußdeckel praktisch nicht mit Zugkräften belastet. Um den ohnehin schon geringen thermischen Kurzschluß zwischen Vor- und Rücklauf weiter zu verringern, kann auf das Tauchrohr zusätzlich eine Isolation aufgebracht sein, beispielsweise in Form eines aufgezogenen Wellrohrs aus Kunststoff, wobei der Zwischenraum zwischen Tauchrohr und Wellrohr zweckmäßig auch mit dem Fluid gefüllt ist.

Weiter ist erfindungsgemäß vorgesehen, daß das Sondenrohr entweder in Vertikalrichtung oder in einer schräg, vorzugsweise zwischen 15° und 75°, zur Vertikalrichtung verlaufenden Richtung in das Erdreich eingetrieben ist. Die jeweilige Eintreibrichtung richtet sich nach den örtlichen Gegebenheiten. Sofern ausreichend Grundfläche zur Verfügung steht, ist eine schräge Eintreibrichtung vorzuziehen, weil dadurch eine größere Wärmeeinzugsfläche an der Erdoberfläche erzielt wird. Auf diese Weise kann die benötigte Wärmeenergiemenge, z.B. für die Beheizung eines Wohngebäudes, mit einer geringeren Anzahl von Sondenrohren aus dem Erdreich gewonnen werden. Wie eingangs schon erwähnt, betrifft die vorliegende Erfindung unter anderem eine Anlage für die oberflächennahe Gewinnung von Erdwärme, wobei es sich hier um solche Erdwärme handelt, die von Sonneneinstrahlung erzeugt ist. Aus diesem Grund ist es vorteilhaft, wenn das Sondenrohr schräg zur Vertikalrichtung verläuft, da dann die Fläche des auf die Erdoberfläche projizierten Einzugsbereichs der Erdsonde größer wird als bei einem rein vertikalen Verlauf des Sondenrohrs. Ein schräger verlauf des Sondenrohrs oder einer Anordnung von Sondenrohren ist mit der Rammtechnik problemlos möglich und insbesondere wesentlich einfacher als die Erstellung von schräg verlaufenden Bohrlöchern, insbesondere wenn der Winkel zur Vertikalrichtung relativ groß, beispielsweise größer als 45°, ist.

Falls das Erdreich so fest ist, daß ein Eintreiben der Rammrohrabschnitte zu Problemen führt, kann ausnahmsweise vorgesehen sein, daß das Sondenrohr in eine in das Erdreich vorgebohrte Bohrung eingetrieben ist, deren Bohrungstiefe maximal so groß ist wie die Länge des Sondenrohrs und deren Bohrungsdurchmesser kleiner ist als der Außendurchmesser des Sondenrohrs. Das Bohrloch wird also vollständig vom Sondenrohr ausgefüllt, wodurch der gute Wärmeleitungskontakt zwischen Erdreich und Sondenrohr auch hier erreicht wird. Gleichzeitig wird das Eintreiben wesentlich erleichtert.

Damit die einzelnen Rammrohrsegmente des Sondenrohrs schadlos in das Erdreich eingetrieben werden können, ist zur Erzielung der dafür erforderlichen Stabilität bevorzugt vorgesehen, daß die Wandstärke jedes Rammrohrsegments, abgesehen vom Bereich seiner beiden Enden, zwischen 10 und 20% des Außendurchmessers des Rammrohrsegments beträgt. Die Rammrohrsegmente sind damit im Verhältnis zu ihrem Durchmesser sehr dickwandig, was aber aufgrund der hohen Wärmeleitfähigkeit des Metalls, aus dem die Rammrohrsegmente bestehen, nicht nachteilig für den Wärmeübergang aus dem Erdreich in das Wärmetransportfluid im Inneren des Sondenrohrs oder umgekehrt ist.

In einer konkreteren, für die meisten in der Praxis auftretenden Anwendungsfälle gut geeigneten Ausführung weist jedes Rammrohrsegment, abgesehen vom Bereich seiner beiden Enden, einen Außendurchmesser zwischen etwa 80 und 200 mm und eine Wandstärke zwischen etwa 7 und 12 mm auf. Mit den angegebenen Dimensionen sind die Rammrohrsegmente noch mit relativ geringem Aufwand und dadurch mit entsprechend relativ leichten Maschinen in das Erdreich eintreibbar, so daß auch in bebauten Gebieten derartige Rammrohrsegmente noch problemlos in das Erdreich eingetrieben werden können, ohne daß Gefahren für Gebäude in der Umgebung entstehen.

Weiter ist in einer konkreten Ausgestaltung bevorzugt vorgesehen, daß die Länge jedes Rammrohrsegments zwischen etwa 4 und 6 m, bevorzugt etwa 5 m, und die Gesamtlänge des Sondenrohrs etwa 10 bis 50 m und, wenn es die Bodenverhältnisse zulassen, auch mehr, beträgt. Bei diesen Dimensionen der Rammrohrsegmente sind die einzelnen Segmente noch von zwei Arbeitskräften und gängigen Handhabungsvorrichtungen handhabbar, was die Arbeiten vor Ort an der Stelle, wo die Rammrohrsegmente in das Erdreich einzutreiben sind, erleichtert. An Personal genügen zwei Personen, nämlich ein Führer für einen Bagger mit Hydraulikhammer und eine Person zum Anreichen der Rohrsegmente und zur Hilfestellung bei Ansetzen jeweils eines neuen Rohrsegments. Bei der angegebenen bevorzugten Gesamtlänge des Sondenrohrs ist in den meisten Fällen in der Praxis zu erwarten, daß das Eintreiben der Rammrohrsegmente des Sondenrohrs noch ohne Probleme und mit einer relativ hohen Eintreibgeschwindigkeit möglich ist. Erleichtert wird in der Regel das Eintreiben der Rammrohrsegmente, wenn diese, wie oben schon beschrieben, nicht vertikal, sondern schräg in das Erdreich eingebracht werden.

Aus ökologischen Gründen ist bevorzugt das Wärmetransportfluid reines Wasser, insbesondere ohne Frostschutzmittel-Zusatz und insbesondere unter einem Druck in der Größenordnung von etwa 10 bar. Hierdurch werden alle Grundwasser- und sonstige Umweltgefährdungen grundsätzlich ausgeschlossen, wodurch auch Genehmigungen durch Behörden wesentlich leichter zu erhalten sind oder sogar ganz entfallen können.

Alternativ besteht die Möglichkeit, daß das Wärmetransportfluid Kohlendioxid, insbesondere unter einem Druck in der Größenordnung von etwa 100 bar und mehr, ist. Hiermit können Erdsonden nach den sogenannten "Heat-Pipe"-Verfahren betrieben werden, zumal die Sondenrohre konstruktiv in der Lage sind, einem derart hohen Innendruck schadlos standzuhalten. Bei den Sondenrohren ist es außerdem kein Problem, diese an ihrem oberen Ende mit einem entsprechend druckfesten Deckel zu versehen, hier insbesondere durch Aufschweißen. Auch besteht die Möglichkeit, das "Heat-Pipe"-Verfahren durch Wahl eines günstigen Eintreibwinkels des Sondenrohrs zu optimieren und insbesondere gegenüber bisher üblichen Vertikalbohrungen deutlich zu verbessern.

Wie oben erwähnt, ist der duktile Guß, aus dem die Rammrohrsegmente bevorzugt bestehen, wesentlich korrosionsfester als üblicher Grauguß. Um auch bei langen Betriebszeiten von mehreren Jahrzehnten das Sondenrohr noch stärker gegen Undichtigkeiten zu schützen, kann zusätzlich jedes Rammrohrsegment an seiner äußeren und/oder inneren Oberfläche mit einer Korrosionsschutzschicht versehen sein. Liegt im Erdreich salzhaltiges Wasser vor, z.B. in Küstennähe, kann das Sondenrohr durch eine Fremdstromanode wirkungsvoll gegen Korrosion geschützt werden.

Die Korrosionsschutzschicht kann beispielsweise durch eine Verzinkung oder durch einen Kunststoffüberzug, vorzugsweise aus Polyurethan (PU), gebildet sein, wobei der Werkstoff jeweils sauerstoffdiffusionsdicht sein soll.

Ein weiterer Beitrag zur Vermeidung von Korrosionsschäden besteht darin, daß für die Verrohrung der übrigen Anlage sowie deren Verbindung mit einer Heiz- oder Kühleinrichtung Leitungen verwendet werden, die sauerstoffdiffusionsdicht sind. Hierdurch wird ein Eintrag von eine Korrosion der Rammrohrsegmente möglicherweise förderndem Sauerstoff in das Wärmetransportfluid verhindert.

Im folgenden werden Ausführungsbeispiele der Erfindung anhand einer Zeichnung erläutert. Die Zeichnungsfiguren zeigen:
- Figur 1: eine Wärmegewinnungsanlage mit einem einzelnen Sondenrohr in seinem vertikal in das Erdreich eingetriebenen Zustand, in einem schematisierten Vertikalschnitt,
- Figur 2: einen Ausschnitt aus einem geänderten Sondenrohr, im Längsschnitt, und
- Figur 3: eine Wärmegewinnungsanlage mit zwei Sondenrohren, die schräg in das Erdreich eingetrieben sind, in einem schematisierten Vertikalschnitt.

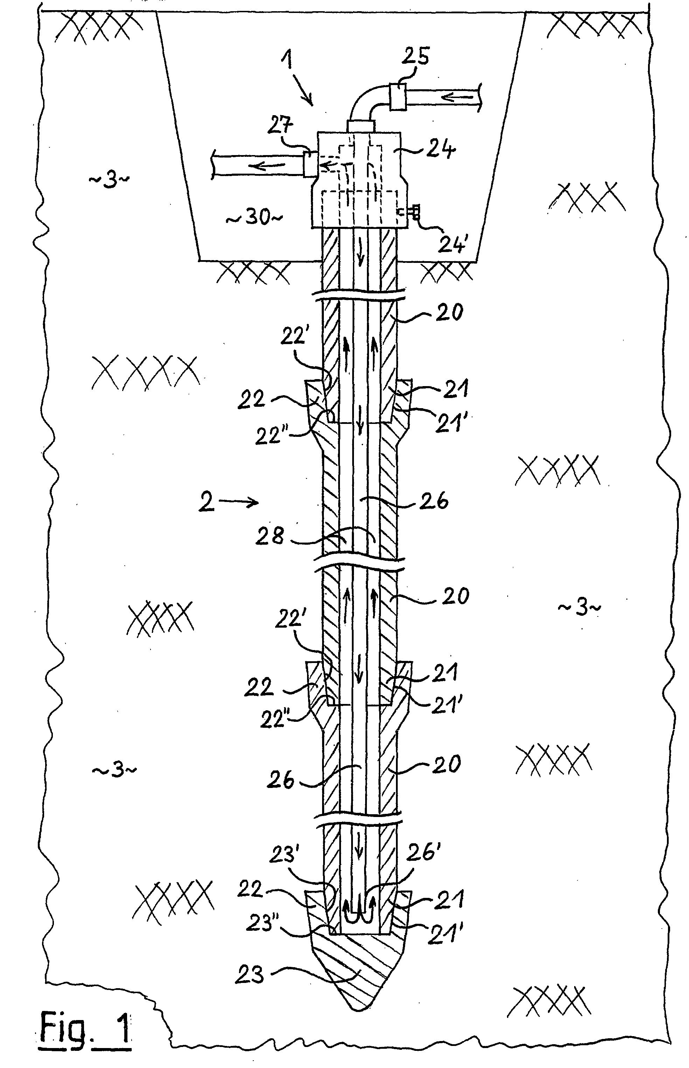

Gemäß dem in Figur 1 dargestellten Ausführungsbeispiel besteht die Erdsonde 1 aus einem Sondenrohr 2, das aus mehreren Rammrohrsegmenten 20 zusammengesetzt ist. Zur Erstellung der Erdsonde 1 werden in einer vorab hergerichteten, relativ kleinen Baugrube 30 zunächst Rammrohrsegmente 20 in der benötigten Anzahl nacheinander in das Erdreich 3 eingetrieben, beispielsweise mittels eines an einem Baggerausleger oder an einer Lafette montierten hydraulischen Hammers. Zunächst wird das in der Zeichnung untere Rammrohrsegment 20 mit einer Sondenspitze 23 versehen, um ein möglichst widerstandsarmes, leichtes und schnelles Eintreiben in das Erdreich 3 zu erreichen. Die Sondenspitze 23 ist hier dicht mit dem vorderen Ende 21 des unteren Rammrohrsegments 20 verbunden. Sobald das erste Rammrohrsegment 20 annähernd vollständig in das Erdreich 3 eingetrieben ist, wird ein zweites Rammrohrsegment 20 angesetzt, wonach dann das erste und zweite Rammrohrsegment 20 gemeinsam weiter in das Erdreich 3 eingetrieben werden.

Durch die ausgeübten Eintreibschläge des hydraulischen Hammers verbinden sich die Rammrohrsegmente 20 miteinander sowie mit der Sondenspitze 23 kraftschlüssig und dicht. Zu diesem Zweck ist jeweils das vordere Ende 21 jedes Rammrohrsegments 20 mit einem konischen Außenumfang 21' ausgebildet. Am jeweils hinteren Ende jedes Rammrohrsegments 20 und an der hinteren Seite der Sondenspitze 23 ist jeweils eine Muffe 22 mit einem passend konischen Innenumfang 22' bzw. 23' vorgesehen. Die Konuswinkel von Außenumfang 21' und Innenumfang 22' bzw. 23' sind dabei so gewählt und aufeinander abgestimmt, daß sich beim Eintreiben der Rammrohrsegmente 20 die gewünschte kraftschlüssige und dichte Verbindung allein durch die Eintreibschläge oder -impulse ergibt, wobei durch diese auftretenden Schläge oder Impulse im Verbindungsbereich eine Reibschweißung erzeugt wird. Jede Muffe 22 ist an ihrem unteren Teil mit einer Schulter 22'' bzw. 23'' versehen und in Verbindung mit dem eingesteckten vorderen Ende 21 des jeweils anderen Segments 20 so gestaltet, daß das eingesteckte Ende 21 des Segments 20 nach einer definierten Aufweitung der Muffe 22 auf diese Schulter 22'' bzw. 23" aufsetzt und danach die Eintreibimpulse weiterleitet, ohne daß die Muffe 22 in Aufweitrichtung unzulässig beansprucht wird.

Die Rammrohrsegmente 20 und die Sondenspitze 23 bestehen bevorzugt aus duktilem Gußeisen, das besonders fest und gleichzeitig zäh ist, so daß es die Eintreibschläge schadlos aufnehmen kann und die gewünschte Reibverschweißung bei dem Eintreiben der Rammrohrsegmente 20 in deren Verbindungsbereichen erlaubt. Sobald die benötigte Gesamtlänge des Sondenrohrs 2, in der Praxis beispielsweise zwischen etwa 10 und 50 m, erreicht ist, wird das Eintreiben der Rammrohrsegmente 20 beendet. Auf das obere Ende des oberen Rammrohrsegments 20 wird ein Anschlußdeckel 24 dichtend aufgesetzt und mit mindestens einer Feststellschraube 24' gesichert. Der Anschlußdeckel 24 besitzt je einen Vorlaufleitungsanschluß 25 und Rücklaufleitungsanschluß 27 für ein Wärmetransportfluid. Das Wärmetransportfluid ist im einfachsten Fall Wasser, das bedarfsweise mit einem Frostschutzmittel, üblicherweise Alkohol, versetzt ist. Mit dem Vorlaufleitungsanschluß 25 ist ein Tauchrohr 26 verbunden, das lediglich am Anschlußdeckel 24 gehaltert ist und ansonsten frei durch das hohle Innere 28 des Sondenrohrs 2 verläuft. Die Länge dieses Tauchrohrs 26 ist dabei nur geringfügig kleiner als die Länge des Sondenrohrs 2.

Im Betrieb der Erdsonde 1 als Teil einer Heizeinrichtung strömt kaltes Wärmetransportfluid durch den Vorlaufleitungsanschluß 25 in das Tauchrohr 26 und durch dieses bis zum unteren Endbereich des Sondenrohrs 2. Am unteren Ende 26' des Tauchrohrs 26 tritt das Wärmetransportfluid aus dem Tauchrohr 26 aus und strömt nun von unten nach oben durch den Bereich des Inneren 28 des Sondenrohrs 2, der nicht vom Tauchrohr 26 eingenommen wird. Auf seinem Weg entlang der Wand des Sondenrohrs 2 von unten nach oben nimmt das Wärmetransportfluid Wärmeenergie aus dem umgebenden Erdreich 3 auf, wobei sich das Wärmetransportfluid gegenüber seiner ursprünglichen Temperatur erwärmt. Das erwärmte Wärmetransportfluid verläßt durch den im Anschlußdeckel 24 vorgesehenen seitlichen Rücklaufleitungsanschluß 27 das Sondenrohr 2. Die an den Anschluß 27 angeschlossene Rücklaufleitung führt im Fall der hier angenommenen Wärmegewinnungsanlage üblicherweise zu einer Wärmepumpe, in der die im Wärmetransportfluid enthaltene und transportierten Erdwärme entzogen und für Heizungszwecke, beispielsweise für eine Gebäudeheizung oder eine Wassererwärmung, genutzt wird. Das aus der Wärmepumpe austretende, nun in seiner Temperatur herabgesetzte Wärmetransportfluid wird dann wieder zum Vorlaufleitungsanschluß 25 und durch das Tauchrohr 26 in das Innere 28 des Sondenrohrs 2 geführt. Es liegt hier also ein geschlossener Wärmetransportfluid-Kreislauf vor.

Besonders vorteilhaft ist ein Intervallbetrieb der zugehörigen Heizungseinrichtung und Wärmepumpe, weil dann das Wärmetransportfluid jeweils während seiner Verweilzeit im Sondenrohr 2 eine relativ große Wärmeenergiemenge aus dem Erdreich aufnehmen und so eine relativ große Temperaturerhöhung erfahren kann, was für den Wirkungsgrad der Wärmepumpe günstig ist. Hier macht sich der hohe Fluidgehalt der Erdsonde positiv bemerkbar, der in der Praxis beispielsweise etwa 10 1/m betragen kann. Damit ergeben sich typische Zeiten von etwa 30 bis 60 Minuten für eine vollständige Umwälzung des Wärmetransportfluids.

Das Sondenrohr 2 ist aufgrund seiner relativ großen Materialstärke, die für das Eintreiben in das Erdreich 3 erforderlich ist, für sehr lange Einsatzzeiten im Bereich von vielen Jahrzehnten absolut dicht, so daß ein Austritt von Wärmetransportfluid aus den Sondenrohr 2 in das Erdreich 3 praktisch ausgeschlossen ist. Das Sondenrohr 2 ist nach dem Eintreiben in das Erdreich 3 innig in dieses eingebettet, so daß in Verbindung mit der guten Wärmeleitfähigkeit der metallischen Wand des Sondenrohrs 2 ein hoher Wirkungsgrad beim Wärmeübergang aus dem Erdreich 3 in das Wärmetransportfluid im hohlen Inneren 28 des Sondenrohrs 2 sowie in umgekehrter Richtung erreicht wird.

Die Vorlauf- und Rücklaufleitung für das Wärmetransportfluid wird zweckmäßig ebenfalls im Erdreich 3 angeordnet, wobei dann vorteilhaft eine Anordnung unterhalb der Frostgrenze, z.B. in einer Tiefe von etwa 1 m oder bedarfsweise mehr, sinnvoll ist.

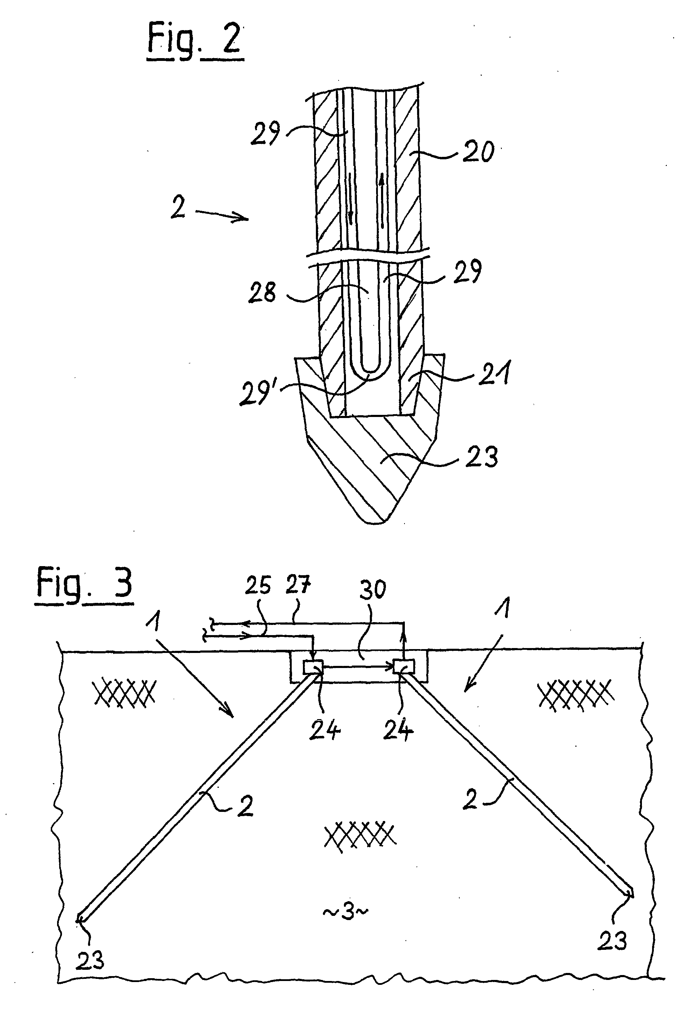

Für die Führung des Wärmetransportfluids kann gemäß Figur 2 alternativ auch eine Rohrschleife 29 eingesetzt werden, die U-förmig im Sondenrohr 2 liegt. Der U-Bogen 29' liegt dabei zweckmäßig nahe dem unteren Ende des Sondenrohrs 2. Das Wärmetransportfluid bleibt hierbei über seinen gesamten Weg durch das Sondenrohr 2 in der Rohrschleife 29 eingeschlossen und' kommt nicht in unmittelbaren Kontakt mit dem Sondenrohr 2. Deshalb ist für Zwecke der Wärmeleitung der Raum des Sondenrohrinneren 28 um die Rohrschleife 29 herum mit einem wärmeleitenden Füllmaterial, z.B. Wasser, gefüllt, das hier dann eine im wesentlichen stehende Flüssigkeit ist.

Je nach Energiebedarf kann eine Wärmegewinnungsanlage ein oder mehrere Sondenrohre 2 umfassen. Bei Verwendung mehrerer Sondenrohre 2 oder Erdsonden 1, wie in Figur 3 schematisch dargestellt, können diese aufgrund ihres niedrigen hydraulischen Widerstandes vorteilhaft in Reihe geschaltet werden, wobei die Länge der einzelnen Sondenrohre 2 beliebig ist. Dadurch wird die Installation deutlich günstiger und es entfällt ein hydraulischer Abgleich, der immer mit Energieverlusten verbunden ist. Bei Bedarf ist aber auch eine Parallelschaltung oder eine gemischte Schaltung einer größeren Anzahl von Sondenrohren 2 selbstverständlich möglich.

Der Abstand mehrerer Erdsonden 1 voneinander bei einer Anlage mit mehreren Erdsonden 1 richtet sich nach dem Einzugsbereich jeder einzelnen Erdsonde 1, wobei die Größe des Einzugsbereichs von der Wärmeleitfähigkeit des Erdreichs 3 im jeweiligen Einzelfall abhängt. Auch können die Sondenrohre 2 statt, wie in der Figur 1 der Zeichnung dargestellt, vertikal, auch in einer schrägen Richtung in das Erdreich 3 eingetrieben werden, wie dies die Figur 3 zeigt. Dies ist in vielen Anwendungsfällen vorteilhaft, weil dann pro Sondenrohr 2 eine größere Einzugsfläche für die von der Sonne über die Erdoberfläche in das Erdreich 3 eingestrahlte Wärmeenergie erzielt werden kann. Dies erlaubt dann bei zunehmender Abweichung der Sondenrichtung von der Vertikalen einen kleiner werdenden Sondenabstand. Damit können für eine vorgegebene Energiemenge, die benötigt wird, die oberen Enden der Sonden 2 auf einer kleineren Gesamtfläche angeordnet werden, was Platz und Installationsaufwand einspart.

## Patentansprüche

1. Wärmequellen- oder Wärmesenken-Anlage mit thermischer Erdankopplung für die oberflächennahe Gewinnung von Wärmeenergie aus dem Erdreich oder für die oberflächennahe Einleitung von Wärmeenergie in das Erdreich, wobei die Anlage mindestens eine im Erdreich (3) angeordnete Erdsonde (1) umfaßt, wobei Wärmeenergie mittels eines durch die Erdsonde (1) geleiteten Wärmetransportfluids entweder aus dem Erdreich (3) entnehmbar oder in das Erdreich (3) einleitbar ist, wobei jede Erdsonde (1) ein zum umgebenden Erdreich (3) dichtes, metallisches Sondenrohr (2) aus mehreren in das Erdreich (3) eingetriebenen Rammrohrsegmenten (20) umfaßt, wobei im Sondenrohr (2) für die Zu- oder Abführung des Wärmetransportfluids entweder ein an seinem unteren Ende offenes Tauchrohr (26) oder eine U-förmig verlaufende Rohrschleife (29) angeordnet ist und wobei das erste, vorlaufende Rammrohrsegment (20) des Sondenrohrs (2) an seinem vorderen Ende (21) mit einer Sondenspitze (23) ausgeführt oder dicht verbunden ist,
**dadurch gekennzeichnet,**
- **daß** jedes Rammrohrsegment (20) aus duktilem Gußeisen besteht,
- **daß** die Rammrohrsegmente (20) an ihren Enden (21, 22) ineinandersteckbar ausgebildet sind,
- **daß** jedes Rammrohrsegment (20) an seinem einen Ende (21) einen konisch zulaufenden Außenumfäng (21') und an seinem anderen Ende eine mit einer Anschlagschulter (22'') ausgeführte Muffe (22) mit einem passenden konischen Innenumfang (22') aufweist, wobei deren Durchmesser und Konuswinkel so bemessen sind, daß mit dem Eintreiben der Rammrbhrsegmente (20) eine kraftschlüssige und dichte Verbindung der Rammrohrsegmente (20) untereinander erzeugbar ist.

2. Anlage nach Anspruch 1, **dadurch gekennzeichnet daß** jeweils der konisch zulaufende Außenumfang (21') jedes Rammrohrsegments (20) an dessen vorderem Ende (21) und die mit der Anschlagschulter (22'') ausgeführte Muffe (22) jedes Rammrohrsegments (20) an dessen hinterem Ende vorgesehen ist.

3. Anlage nach Anspruch 1 oder 2, **dadurch gekennzeichnet daß** der Außendurchmesser des Tauchrohrs (26) kleiner als der Innendurchmesser des Sondenrohrs (2) ist und daß die Länge des Tauchrohrs (26) geringfügig kleiner als die Länge des Sondenrohrs (2) ist,

4. Anlage nach Anspruch 1 oder 2, **dadurch gekennzeichnet daß** die Länge der U-förmig verlaufenden Rohrschleife (29) bis zu ihrem U-Bogen geringfügig kleiner als die Länge des Sondenrohrs (2) ist und daß der nicht von der Rohrschleife (29) eingenommene Teil des Inneren (28) des Sondenrohrs (2) mit einem wärmeleitfähigen Füllmaterial gefüllt ist,

5. Anlage nach einem der vorangehenden Ansprüche, **dadurch gekennzeichnet, daß** das letzte Rammrohrsegment (20) des Sondenrohrs (2) an seinem hinteren Ende dicht mit einem nach dem Eintreiben aufgesetzten Anschlußdeckel (24) verbunden ist, an dem ein Vorlaufleitungsanschluß (25) und ein Rücklaufleitungsanschluß (27) für das Wärmetransportfluid angeordnet sind.

6. Anlage nach Anspruch 5, **dadurch gekennzeichnet, daß** das Tauchrohr (26) oder die Rohrschleife (29) allein am oder im Anschlußdeckel (24) gehaltert ist.

7. Anlage nach einem der vorangehenden Ansprüche, **dadurch gekennzeichnet, daß** das Tauchrohr (26) oder die Rohrschleife (29) an ihrem oberen Ende eine Entlüftungsbohrung (29) oder ein Entlüftungsventil aufweist.

8. Anlage nach einem der vorangehenden Ansprüche, **dadurch gekennzeichnet, daß** das Tauchrohr (26) oder die Rohrschleife (29) aus Kunststoff, vorzugsweise Polyethylen (PE) oder Polypropylen (PP), besteht.

9. Anlage nach einem der vorangehenden Ansprüche, **dadurch gekennzeichnet, daß** das Sondenrohr (2) entweder in Vertikalrichtung oder in einer schräg, vorzugsweise zwischen 15° und 75°, zur Vertikalrichtung verlaufenden Richtung in das Erdreich (3) eingetrieben ist.

10. Anlage nach einem der vorangehenden Ansprüche, **dadurch gekennzeichnet, daß** das Sondenrohr (2) in eine in das Erdreich (3) vorgebohrte Bohrung eingetrieben ist, deren Bohrungstiefe maximal so groß ist wie die Länge des Sondenrohrs (2) und deren Bohrungsdurchmesser kleiner ist als der Außendurchmesser des Sondenrohrs (2).

11. Anlage nach einem der vorangehenden Ansprüche, **dadurch gekennzeichnet, daß** die Wandstärke jedes Rammrohrsegments (20), abgesehen vom Bereich seiner beiden Enden (21, 22), zwischen 10 und 20% des Außendurchmessers des Rammrohrsegments (20) beträgt

12. Anlage nach einem der vorangehenden Ansprüche, **dadurch gekennzeichnet, daß** jedes Rammrohrsegment (20), abgesehen vom Bereich seiner beiden Enden (21, 22), einen Außendurchmesser zwischen etwa 80 und 200 mm und eine Wandstärke zwischen etwa 7 und 12 mm aufweist.

13. Anlage nach einem der vorangehenden Ansprüche, **dadurch gekennzeichnet, daß** die Länge jedes Rammrohrsegments (20) zwischen etwa 4 und 6 m, bevorzugt etwa 5 m, und die Gesamtlänge des Sondenrohrs (2) etwa 10 bis 50 m, bei geeigneten Bodenverhältnissen auch mehr, beträgt.

14. Anlage nach einem der vorangehenden Ansprüche, **dadurch gekennzeichnet, daß** das Wärmetransportfluid Wasser, insbesondere ohne Frostschutzmittel-Zusatz und insbesondere unter einem Druck in der Größenordnung von bis zu etwa 10 bar, ist.

15. Anlage nach einem der Ansprüche 1 bis 13, **dadurch gekennzeichnet, daß**.das Wärmetransportfluid Kohlendioxid, insbesondere unter einem Druck in der Größenordnung von etwa 100 bar und mehr, ist.

16. Anlage nach einem der vorangehenden Ansprüche, **dadurch gekennzeichnet, daß** jedes Rammrohrsegment (20) an seiner äußeren und/oder inneren Oberfläche mit einer Korrosionsschutzschicht versehen ist.

17. Anlage nach Anspruch 16, **dadurch gekennzeichnet, daß** die Korrosionsschutzschicht durch eine Verzinkung oder durch einen Kunststoffüberzug, vorzugsweise aus Polyurethan (PU), gebildet ist.

## Claims

1. Heat source or heat sink system with thermal ground coupling for near-surface recovery of thermal energy from the ground or for near-surface discharge of thermal energy into the ground, wherein the system comprises at least one ground probe (1) arranged in the ground (3), wherein thermal energy can either be withdrawn from or discharged into the ground (3) by means of a heat transfer fluid supplied through the ground probe (1), wherein each ground probe (1) comprises a metallic probe shaft (2) that is tight against the surrounding ground (3) and consists of several drive-pipe segments (20) driven into the ground (3), wherein either an immersion pipe (26) that is open at its lower end or a U-shaped pipe loop (29) is arranged in the probe shaft (2) for supplying or removing the heat transfer fluid, and wherein the first advancing drive-pipe segment (20) of the probe shaft (2) is, at its forward end, designed with or tightly connected to a probe tip (23),
**characterized in that**
- each drive-pipe segment (20) consists of ductile cast iron;
- the drive-pipe segments (20) are formed such that they can be fitted into each other at their ends (21, 22);
- each drive-pipe segment (20) comprises a tapered outer perimeter (21') at one of its ends and, at its other end, a sleeve (22) provided with a stop shoulder (22'') and having a mating tapered inner perimeter (22'), wherein their diameters and taper angles are dimensioned such that the drive-pipe segments (20), on being driven in, can be connected to each other in a force-closed and tight manner.

2. System according to Claim 1, **characterized in that** each tapered outer perimeter (21') of each drive-pipe segment (20) is provided at the forward end (21) of said drive-pipe segment (20) and that the sleeve (22) of each drive-pipe segment (20) that is designed with the stop shoulder (22'') is provided at the backward end of said drive-pipe segment (20).

3. System according to Claim 1 or 2, **characterized in that** the outer diameter of the immersion pipe (26) is smaller than the inner diameter of the probe shaft (2) and that the length of the immersion pipe (26) is slightly smaller than the length of the probe shaft (2).

4. System according to Claim 1 or 2, **characterized in that** the length of the U-shaped pipe loop (29) extending up to the latter's U-bend is slightly smaller than the length of the probe shaft (2) and that the part of the interior region (28) of the probe shaft (2) that is not occupied by the pipe loop (29) is filled with a thermally conductive filling material.

5. System according to anyone of the preceding claims, **characterized in that** the last drive-pipe segment (20) of the probe shaft (2) is, at its backward end, tightly connected to a connection cover (24) attached after completion of the drive-in procedure, with an inflow line connection (25) and a return flow line connection (27) for the heat transfer fluid being arranged on said connection cover (24).

6. System according to Claim 5, **characterized in that** the immersion pipe (26) or the pipe loop (29) is solely mounted to or in the connection cover (24).

7. System according to anyone of the preceding claims, **characterized in that** the immersion pipe (26) or the pipe loop (29) comprises an air vent (29) or a vent valve at its upper end.

8. System according to anyone of the preceding claims, **characterized in that** the immersion pipe (26) or the pipe loop (29) consists of plastic material, preferrably polyethylene (PE) or polypropylene (PP).

9. System according to anyone of the preceding claims, **characterized in that** the probe shaft (2) is driven into the ground (3) either in vertical direction or in an inclined direction preferrably extending at an angle ranging from 15 to 75 degrees in relation to the vertical direction.

10. System according to anyone of the preceding claims, **characterized in that** the probe shaft (2) is driven into a borehole that has been predrilled into the ground (3), with the depth of the borehole being maximally as great as the length of the probe shaft (2) and with the diameter of the borehole being smaller than the outer diameter of the probe shaft (2).

11. System according to anyone of the preceding claims, **characterized in that** the wall thickness of each drive-pipe segment (20), with the exception of the region at either of its ends (21, 22), ranges from 10 to 20 percent of the outer diameter of the drive-pipe segment (20).

12. System according to anyone of the preceding claims, **characterized in that** each drive-pipe segment (20), with the exception of the region at either of its ends (21, 22), comprises an outer diameter approximately ranging from 80 to 200 mm and a wall thickness approximately ranging from 7 to 12 mm.

13. System according to anyone of the preceding claims, **characterized in that** the length of each drive-pipe segment (20) approximately ranges from 4 to 6 m and is preferrably 5 m, and that the total length of the probe shaft (2) approximately ranges from 10 to 50 m and even more if this is permitted by the actual ground conditions.

14. System according to anyone of the preceding claims, **characterized in that** the heat transfer fluid is water, in particular without any antifreeze additive and in particular under a pressure of an order approximately ranging up to 10 bar.

15. System according to anyone of Claims 1 through 13, **characterized in that** the heat transfer fluid is carbon dioxide, in particular under a pressure of an order of approximately 100 bar and more.

16. System according to anyone of the preceding claims, **characterized in that** each drive-pipe segment (20) is provided with an anticorrosive layer on its external and/or internal surface.

17. System according to Claim 16, **characterized in that** the anticorrosive layer is formed by galvanizing or by a plastic coating, preferrably of polyurethane (PU).

## Revendications

1. Dispositif de source thermique ou de dissipation thermique comportant un couplage thermique à la terre pour l'extraction, à proximité de la surface, d'énergie thermique tirée du sol ou pour l'introduction, à proximité de la surface, d'énergie thermique dans le sol, le dispositif comprenant au moins une sonde de terrain (1) placée dans le sol (3), l'énergie thermique pouvant être, au moyen d'un fluide de transport thermique conduit par la sonde de terrain (1), soit soutirée soit introduite dans le sol (3), chaque sonde de terrain (1) comprenant un tube de sonde (2) métallique, étanche par rapport au sol environnant (3), composé de plusieurs segments (20) de tube à battre enfoncés dans le sol (3), soit un tube plongeur (26) ouvert en son extrémité inférieure soit un tuyau en boucle (29) en forme de U étant disposé dans le tube de sonde (2) pour l'amenée ou l'évacuation du fluide de transport thermique et le premier segment (20) de tube à battre du tube de sonde (2), lequel segment est en avant, étant, en son extrémité avant (21), réalisé ou assemblé de manière étanche avec une pointe de sonde (23), **caractérisé en ce que**
- chaque segment (20) de tube à battre se compose de fonte ductile,
- les segments (20) de tube à battre sont réalisés de manière à pouvoir être emboîtés l'un dans l'autre en leurs extrémités (21, 22),
- chaque segment (20) de tube à battre présente, en l'une de ses extrémités (21), un pourtour extérieur (21') qui converge coniquement et, en son autre extrémité, un manchon (22) réalisé avec un épaulement de butée (22''), lequel manchon a un pourtour intérieur (22') conique adéquat, son diamètre et son angle de cône étant dimensionnés de manière telle que l'enfoncement des segments (20) de tube à battre permet de produire un assemblage des segments (20) de tube à battre entre eux étanche et présentant un caractère adhésif.

2. Dispositif selon la revendication 1, **caractérisé en ce que** sont respectivement prévus le pourtour extérieur (21') convergeant coniquement de chaque segment (20) de tube à battre en l'extrémité avant (21) de celui-ci et le manchon (22), réalisé avec un épaulement de butée (22''), de chaque segment (20) de tube à battre en l'extrémité arrière de celui-ci.

3. Dispositif selon la revendication 1 ou 2, **caractérisé en ce que** le diamètre extérieur du tube plongeur (26) est inférieur au diamètre intérieur du tube de sonde (2) et **en ce que** la longueur du tube plongeur (26) est légèrement inférieure à la longueur du tube de sonde (2).

4. Dispositif selon la revendication 1 ou 2, **caractérisé en ce que** la longueur du tuyau en boucle (29) en forme de U, jusqu'au coude du U de celui-ci, est légèrement inférieure à la longueur du tube de sonde (2) et **en ce que** la partie de l'intérieur (28) du tube de sonde (2) non occupée par le tuyau en boucle (29) est remplie d'un matériau de remplissage conducteur de chaleur.

5. Dispositif selon l'une des revendications précédentes, **caractérisé en ce que** le dernier segment (20) de tube à battre du tube de sonde (2) est assemblé de manière étanche, en son extrémité arrière, à un couvercle de raccordement (24) posé après l'enfoncement, au niveau duquel sont disposés un raccordement (25) de conduite d'aller et un raccordement (27) de conduite de retour pour le fluide de transport thermique.

6. Dispositif selon la revendication 5, **caractérisé en ce que** le tube plongeur (26) ou le tuyau en boucle (29) est uniquement maintenu sur ou dans le couvercle de raccordement (24).

7. Dispositif selon l'une des revendications précédentes, **caractérisé en ce que** le tube plongeur (26) ou le tuyau en boucle (29) comporte, en son extrémité supérieure, un perçage de ventilation (29) ou une soupape de ventilation.

8. Dispositif selon l'une des revendications précédentes, **caractérisé en ce que** le tube plongeur (26) ou le tuyau en boucle (29) est composé de matière synthétique, de préférence de polyéthylène (PE) ou de polypropylène (PP).

9. Dispositif selon l'une des revendications précédentes, **caractérisé en ce que** le tube de sonde (2) est enfoncé dans le sol (3) soit dans le sens vertical soit dans un sens oblique, avec une inclinaison comprise de préférence entre 15° et 75°, par rapport au sens vertical.

10. Dispositif selon l'une des revendications précédentes, **caractérisé en ce que** le tube de sonde (2) est enfoncé dans un perçage prépercé dans le sol (3), dont la profondeur de perçage maximale est aussi grande que la longueur du tube de sonde (2) et dont le diamètre de perçage est plus petit que le diamètre extérieur du tube de sonde (2).

11. Dispositif selon l'une des revendications précédentes, **caractérisé en ce que** l'épaisseur de paroi de chaque segment (20) de tube à battre, à part la zone de ses deux extrémités (21, 22), est comprise entre 10 et 20 % du diamètre extérieur du segment (20) de tube à battre.

12. Dispositif selon l'une des revendications précédentes, **caractérisé en ce que** chaque segment (20) de tube à battre, à part la zone de ses deux extrémités (21, 22), a un diamètre extérieur compris entre environ 80 et 200 mm et une épaisseur de paroi comprise entre 7 et 12 mm.

13. Dispositif selon l'une des revendications précédentes, **caractérisé en ce que** la longueur de chaque segment (20) de tube à battre est comprise entre environ 4 et 6 m et est de préférence d'environ 5 m et la longueur totale du tube de sonde (2) est d'environ 10 à 50 m ou plus si les conditions du terrain sont appropriées.

14. Dispositif selon l'une des revendications précédentes, **caractérisé en ce que** le fluide de transport thermique est de l'eau, en particulier sans additif antigel et en particulier sous une pression de l'ordre de maximum 10 bars environ.

15. Dispositif selon l'une des revendications 1 à 13, **caractérisé en ce que** le fluide de transport thermique est du dioxyde de carbone, en particulier sous une pression de l'ordre d'environ 100 bars et plus.

16. Dispositif selon l'une des revendications précédentes, **caractérisé en ce que** chaque segment (20) de tube à battre est pourvu d'une couche de protection contre la corrosion sur sa surface extérieure et/ou sur sa surface intérieure.

17. Dispositif selon la revendication 16, **caractérisé en ce que** la couche de protection contre la corrosion est constituée par un galvanisation ou par un revêtement en matière synthétique, de préférence en polyuréthane (PU).
